# EUROPÄISCHE PATENTSCHRIFT

(11) **EP 1 405 795 B1**
(45) Veröffentlichungstag und Bekanntmachung des Hinweises auf die Patenterteilung: **28.11.2007**
(21) Anmeldenummer: 03020679.1
(22) Anmeldetag: 11.09.2003
(51) Int. Cl.: B65D 19/44

(54) **Mehrwegverpackung für Pumpen**
Reusable package for pumps
Emballage réutilisable pour pompes

(30) Priorität: 01.10.2002 DE 10245829
(43) Veröffentlichungstag der Anmeldung: 07.04.2004
(73) Patentinhaber: WILO AG, 44263 Dortmund (DE)
(72) Erfinder: Goronzy, Bernd, 44575 Castrop-Rauxel (DE); Drees, Jürgen, 59379 Selm (DE)
(74) Vertreter: COHAUSZ DAWIDOWICZ HANNIG & SOZIEN

(56) Entgegenhaltungen:
- DE-U- 7 436 916
- DE-U- 8 023 331
- US-A- 3 315 800
- US-A- 4 747 495
- US-A- 5 154 286

## Beschreibung

Die Erfindung betrifft eine Vorrichtung zum Verpacken und Transport von Inline-Pumpen, deren Motoren- und Pumpenwelle senkrecht steht.

Es ist bekannt, Pumpen in senkrechter Stellung auf Paletten zu transportieren. Hierbei sind sie auf den Paletten von Verpackungsmaterial umgeben, das nach der Entnahme der Pumpe vernichtet wird. Dieses Material ist aufwendig und umweltbelastend. Ferner stellt das Verpacken und Entpacken einen erheblichen Arbeitsaufwand dar. Ferner ist es aus der US 4,747,495 und der 3,315,800 an sich bekannt, Maschinen oder Maschinenteile auf Paletten zu befestigen. Um einen sicheren Halt zu gewährleisten, sind erhebliche zusätzliche Festlegearbeiten erforderlich.

Aufgabe der Erfindung ist es, eine Mehrwegverpackung für Inline-Pumpen zu schaffen, die eine sichere Fixierung der Pumpe während des Transports erreicht, ein einfaches Ausrichten und Befestigen der Pumpe ermöglicht, ein Befestigen in der Verpackung und ein Lösen aus der Verpackung ohne Werkzeuge erleichtert und einen platzsparenden Rücktransport gewährleistet.

Diese Aufgabe wird erfindungsgemäß dadurch gelöst, dass auf einer waagerechten Grundplatte mindestens zwei waagerechte Leisten zueinander parallel befestigt sind, deren Abstand voneinander dem Abstand der beiden äußeren Pumpen-Flanschflächen voneinander entspricht, und dass auf den einander zugewandten Innenseiten der Leisten paarweise Vorsprünge angeordnet sind, von denen jeweils zwei einen von oben zugänglichen Zwischenraum bilden, in den der Pumpen-Flansch einschiebbar ist, und dass an den Leisten Bolzen verschieblich befestigt sind, die in Bohrungen der Pumpen-Flansche einschiebbar sind.

Eine solche Verpackung ermöglicht, einen sicheren Halt und eine leichte Handhabung sowie eine einfache Befestigung und Entnahme der Pumpen, wobei diese während des Transports sicher fixiert sind. Weder für das Aufstellen der Pumpen auf die Platte noch für die Entnahme sind Werkzeuge erforderlich. Die Pumpen können mit einem Kran hereingehoben werden. Beim Rücktransport ohne Pumpe ist die Vorrichtung besonders platzsparend, da sie nur eine geringe Höhe aufweist.

Eine besonders einfache Konstruktion ist gegeben, wenn die Vorsprünge senkrechte Leisten sind, die auf der Innenseite der waagerechten Leisten befestigt sind. Auch können die Bolzen in waagerechten Bohrungen der Leisten axial in der Flanschbohrung axial arretierbar sein.

Ein sicherer Halt ist gegeben, wenn die Bolzen bei Einlage in der Flanschbohrung axial arretierbar sind. Hierzu wird auch vorgeschlagen, dass zur axialen Bolzen-Arretierung die Bolzen einen radialen Vorsprung aufweisen, der nach Drehung des Bolzens um seine Längsachse in einer Ausnehmung insbesondere Tasche der Leisten einliegt.

Vorzugsweise wird vorgeschlagen, dass zur Bildung der Ausnehmung die Bohrung der Leiste, in der der Bolzen einliegt, eine Erweiterung aufweist, die durch eine Platte mit Öffnung und radialem Schlitz verschlossen ist.

Eine besonders einfache Handhabung und ein sicherer Halt wird erreicht, wenn die Bolzen in axialer Richtung zum Pumpen-Flansch hin federbelastet sind. Besonders vorteilhaft ist es, dass auf der Grundplatte Einzel- und Doppelpumpen befestigbar sind.

Ein Ausführungsbeispiel der Erfindung ist in den Zeichnungen dargestellt und wird im folgenden näher beschrieben. Es zeigen
- Fig. 1: eine isometrische Ansicht der Vorrichtung in einer ersten Ausführung,
- Fig. 2: eine isometrische Ansicht der Vorrichtung in einer zweiten Ausführung,
- Fig. 3: einen Ausschnitt aus der Vorrichtung nach Fig. 2 mit einer alternativen Arretierung des Bolzens während des Einsteckens des Bolzens,
- Fig. 4: die Ausführung nach Fig. 3 nach dem Drehen des Bolzens in die arretierte Stellung.

Auf einer waagerechten Grundplatte 1 sind vier Leisten 2 zueinander parallel und jeweils in einem Abstand derart befestigt, dass die Seitenflächen 3 der Leisten 2 senkrecht stehen. In der befestigten Stellung haben die Leisten somit einen rechteckigen Querschnitt mit größerer Höhe H als Breite B.

Je zwei Leisten 2 bilden ein Leistenpaar mit einem gleichbleibenden Abstand A voneinander, so dass in diesem Abstand Inline-Pumpen in einer solchen Weise stellbar sind, dass die Pumpe und Motorenachse senkrecht steht und die beiden Flansche der Pumpenstutzen an den Innenflächen 4 der Leisten 2 anliegen oder nahe sind.

An beiden Innenflächen 4 der Leisten 2 sind senkrechte Leisten 5 befestigt, wobei je zwei Leisten 5 an einer waagerechten Leiste 2 einen Zwischenraum 6 bilden, dessen Breite gleich oder nur wenig größer ist als der Außendurchmesser des Pumpen-Flansches, so dass der Pumpen-Flansch sicher im Zwischenraum 6 gehalten ist. Somit kann die Pumpe mit ihren beiden Flanschen in die beiden gegenüberliegenden Zwischenräume 6 zweier Leisten 2 und damit in den Abstand A von oben insbesondere durch einen Kran eingestellt werden.

Im Bereich des Zwischenraums 6 bildet jede Leiste 2 zwei waagerechte Bohrungen 7, die so angeordnet sind, dass sie mit den Bohrungen in dem Pumpen-Flansch fluchten. In diesen Bohrungen liegen Bolzen 8 ein bzw. werden nachträglich eingesteckt, wobei sie in die Bohrungen der Pumpen-Flansche hineinreichen, so dass die Flansche und damit die Pumpen sicher an den Leisten 2 und damit an der Vorrichtung befestigt sind. Jeder Bolzen 8 weist hierbei einen Einsteckendbereich 9 und am gegenüberliegenden Ende ein abgebogenes Teil als Griff 10 auf.

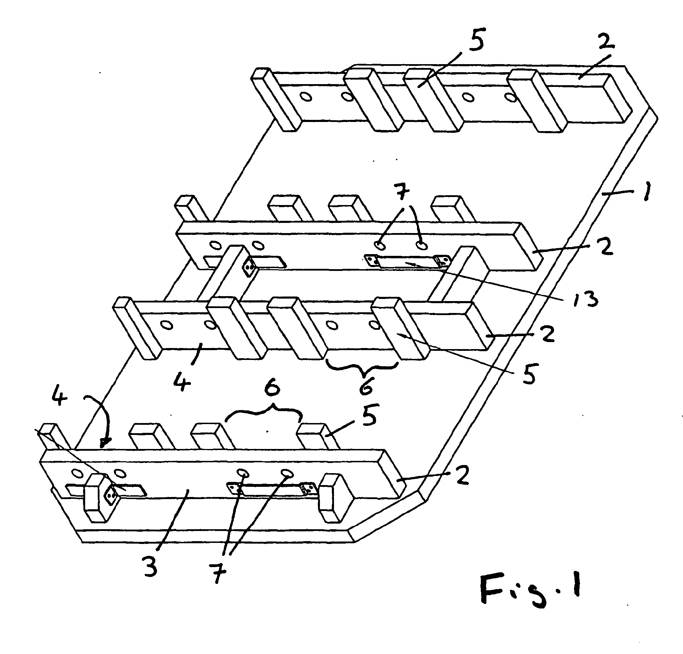

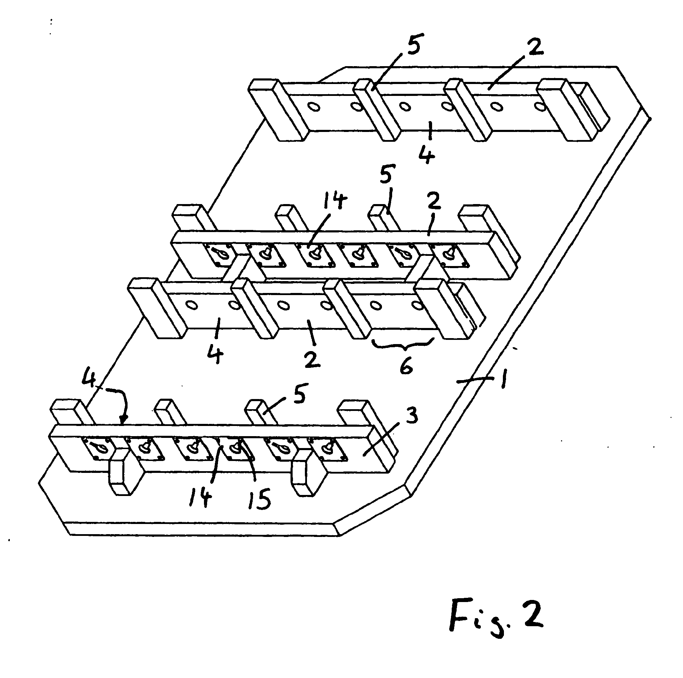

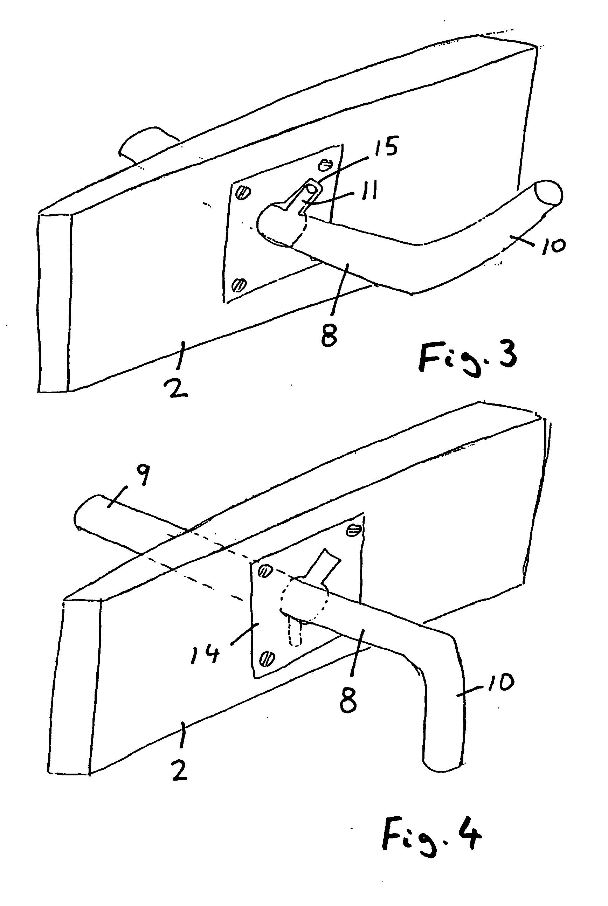

Ferner ist an dem Bolzen 8 ein radialer Vorsprung 11 befestigt, der in einer Ausnehmung 12 bzw. in einer Tasche an der Leiste 2 einliegt, nachdem der Bolzen 8 eingesteckt und um seine Längsachse verdreht wurde. Die Ausnehmung bzw. Tasche 12 kann, wie in Fig. 1 dargestellt, von einem außen an der Leiste 2 angeschraubten Profil 13 gebildet sein. Eine alternative Lösung hierzu zeigt die Ausführung nach Fig. 2 bis 4. Hier wird die Ausnehmung bzw. Tasche von der Leiste 2 gebildet, wobei die Ausnehmung bzw. Tasche von einer außen befestigten bzw. angeschraubten Platte 14 überdeckt ist, die einen radialen Schlitz 15 aufweist, durch die der Vorsprung 11 in die Ausnehmung geschoben werden kann. Danach wird der Bolzen verdreht, so dass der Vorsprung 11 hinter der Platte 14 Halt findet und damit der Bolzen 8 sicher gegen ein axiales Verschieben gehalten ist.

Auf der Vorrichtung können im Ausführungsbeispiel vier Inline-Pumpen, oder zwei Doppelpumpen oder eine Doppelpumpe und zwei Inline-Pumpen befestigt werden. Das Material der Grundplatte 1 und der Leisten 2, 5 besteht vorzugsweise aus Holz und/oder Kunststoff.

## Patentansprüche

1. Vorrichtung zum Verpacken und Transport von Inline-Pumpen, deren Motoren- und Pumpenwelle senkrecht steht, **dadurch gekennzeichnet, dass** auf einer waagerechten Grundplatte (1) mindestens zwei waagerechte Leisten (2) zueinander parallel befestigt sind, deren Abstand (A) voneinander dem Abstand der beiden äußeren Pumpen-Flanschflächen voneinander entspricht, dass auf den einander zugewandten Innenseiten der Leisten (2) paarweise Vorsprünge (5) angeordnet sind, von denen jeweils zwei einen von oben zugänglichen Zwischenraum (6) bilden, in den der Pumpen-Flansch einschiebbar ist und dass an den Leisten (2) Bolzen (8) verschieblich befestigt sind, die in Bohrungen der Pumpen-Flansche einschiebbar sind.

2. Vorrichtung nach Anspruch 1, **dadurch gekennzeichnet, dass** die Vorsprünge (5) senkrechte Leisten sind, die auf der Innenseite der waagerechten Leisten (2) befestigt sind.

3. Vorrichtung nach Anspruch 1 oder 2, **dadurch gekennzeichnet, dass** die Bolzen () in waagerechten Bohrungen (7) der Leisten (2) und in Flanschbohrungen axial einliegen.

4. Vorrichtung nach einem der vorherigen Ansprüche, **dadurch gekennzeichnet, dass** die Bolzen (8) bei Einlage in der Flanschbohrung axial arretierbar sind.

5. Vorrichtung nach Anspruch 3 oder 4, **dadurch gekennzeichnet, dass** zur axialen Bolzen-Arretierung die Bolzen (8) einen radialen Vorsprung (11) aufweisen, der nach Drehung des Bolzens um seine Längsachse in einer Ausnehmung insbesondere Tasche (12) der Leiste (2) einliegt.

6. Vorrichtung nach Anspruch 5, **dadurch gekennzeichnet, dass** zur Bildung der Ausnehmung die Bohrung (7) der Leiste (2), in der der Bolzen (8) einliegt, eine Erweiterung aufweist, die durch eine Platte (14) mit Öffnung und radialem Schlitz (15) verschlossen ist.

7. Vorrichtung nach einem der vorherigen Ansprüche, **dadurch gekennzeichnet, dass** die Bolzen (8) in axialer Richtung zum Pumpen-Flansch hin federbelastet sind.

8. Vorrichtung nach einem der vorherigen Ansprüche, **dadurch gekennzeichnet, dass** auf der Grundplatte (1) Einzel- und Doppelpumpen befestigbar sind.

## Claims

1. A device for the packing and transport of inline umps whose motor and pump shaft is arranged vertically, **characterised in that** at least two horizontal strips (2) are fastened parallel to each other on a horizontal base plate (1), the distance (A) between these strips being equal to the distance between the two outer pump flange surfaces, **in that** projections (5) are arranged in pairs on the insides of the trips (2) facing each other, two of which projections form an interval (6) accessible from above, into which the pump flange can be inserted, and **in that** bolts (8) are fastened displaceably to the strips (2), which bolts can be inserted in holes in the pump flange.

2. The device according to Claim 1, **characterised in that** the projections (5) are vertical strips which are fastened to the inside of the horizontal strips (2).

3. The device according to Claim 1 or 2, **characterised in that** the bolts (8) are inserted axially in horizontal holes (7) in the strips (2) and in flanged holes.

4. The device according to one of the preceding claims, **characterised in that** the bolts (8) can be locked axially when inserted in the flanged hole.

5. The device according to Claim 3 or 4, **characterised in that** the bolts (8) have a radial projection (11) for axial bolt locking, which projection is inserted in a recess, in particular a pocket (12) of the strip (2), after the rotation of the bolt about its longitudinal axis.

6. The device according to Claim 5, **characterised in that** in order to form the recess, the hole (7) in the strip (2), in which the bolt (8) is inserted, has an extension which is sealed by a plate (14) with an opening and radial slot (15).

7. The device according to one of the preceding claims, **characterised in that** the bolts (98) are spring loaded in the axial direction towards the pump flange.

8. The device according to one of the preceding claims, **characterised in that** single and double pumps can be fastened to the base plate (1).

## Revendications

1. Dispositif pour l'emballage et le transport de pompes en ligne, dont l'arbre de moteur et de pompe se situe verticalement, **caractérisé en ce qu'**au moins deux barres horizontales (2) sont fixées parallèlement entre elles sur une plaque de base horizontale (1), barres dont l'écartement mutuel (A) correspond à celui des deux faces de brides de pompes extérieures, que des saillies (5) sont disposées par paires sur les côtés intérieurs des barres (2), tournés les uns vers les autres, saillies dont deux forment respectivement un espace intermédiaire (6) accessible à partir du haut, dans lequel peut être insérée la bride de pompe, et que des axes (8), insérables dans des alésages des brides de pompes, sont fixés de façon mobile sur les barres (2).

2. Dispositif suivant la revendication 1, **caractérisé en ce que** les saillies (5) sont des barres verticales, qui sont fixées sur le côté intérieur des barres horizontales (2).

3. Dispositif suivant l'une des revendications 1 et 2, **caractérisé en ce que** les axes (8) s'insèrent dans la direction axiale dans des trous horizontaux (7) des barres (2) et dans des alésages de brides.

4. Dispositif suivant l'une des revendications précédentes, **caractérisé en ce que** les axes (8) peuvent être bloqués dans la direction axiale lors de l'insertion dans l'alésage de bride.

5. Dispositif suivant l'une des revendications 3 et 4, **caractérisé en que** les axes (8), pour leur blocage axial, présentent une saillie radiale (11) qui s'insère dans un creux, en particulier une poche (12) de la barre (2), après la rotation de l'axe autour de son axe longitudinal.

6. Dispositif suivant la revendication 5, **caractérisé en ce que** le trou (7) de la barre (2), dans lequel s'insère l'axe (8), présente pour la formation du creux un élargissement qui est fermé par une plaque (14) pourvue d'une ouverture et d'une fente radiale (15).

7. Dispositif suivant l'une des revendications précédentes, **caractérisé en ce que** les axes (8) sont chargés par ressorts dans la direction axiale en direction de la bride de pompe.

8. Dispositif suivant l'une des revendications précédentes, **caractérisé en ce que** des pompes individuelles et des pompes doubles peuvent être fixées sur la plaque de base (1).
